# EUROPEAN PATENT APPLICATION

(11) **EP 4 821 633 A1**
(43) Date of publication of application: **14.10.2026**
(21) Application number: 24900380.7
(22) Date of filing: 12.11.2024
(51) Int. Cl.: B23Q 15/18, G05B 19/404

(54) **CALCULATION DEVICE, MACHINE TOOL, CALCULATION METHOD, AND COMPUTER PROGRAM**

(30) Priority: 08.12.2023 JP 2023208065
(71) Applicant: BROTHER KOGYO KABUSHIKI KAISHA, Nagoya-shi, Aichi 467-8561 (JP)
(72) Inventor: YOKOYAMA Akinobu, Nagoya-shi, Aichi 467-8562 (JP); TAKAMATSU Yuki, Nagoya-shi, Aichi 467-8562 (JP)
(74) Representative: Becker, Eberhard
(86) International application number: PCT/JP2024/040105
(87) International publication number: WO 2025/121085

(57) **Abstract**

The present invention provides a calculation device or the like capable of calculating thermal displacement of a support part according to the position of a drive part. This calculation device is provided with: a position measurement unit that measures the position of a movable drive part supported by a support part; a heat transfer amount calculation unit that calculates the heat transfer amount from the drive part to the support part at the position of the drive part measured by the position measurement unit; a first temperature calculation unit that calculates the temperature of the support part on the basis of the heat transfer amount calculated by the heat transfer amount calculation unit; and a first thermal displacement calculation unit that calculates the thermal displacement of the support part on the basis of the temperature calculated by the first temperature calculation unit.

## Description

### TECHNICAL FIELD

The present technique relates to a calculation device that calculates a thermal displacement of a support part supporting a drive part, a machine tool, a calculation method, and a computer program.

### BACKGROUND ART

A machine tool has been disclosed to include a control device (calculation device), a saddle (drive part) accommodating a spindle motor, and a column (support part) supporting the saddle in a vertically movable manner. The control device calculates a thermal displacement amount of the column according to a finite element method, and corrects a tip position of a spindle provided at the spindle motor based on the calculated thermal displacement amount (see Patent Document 1).

### Background Art Documents

### Patent Documents

Patent Document 1: Japanese Patent No. 5811102

### SUMMARY OF INVENTION

### Technical Problem

Heat generated by the spindle motor is transferred from the saddle to the column. The control device changes the vertical position of the saddle. Therefore, the position at which heat is transferred from the saddle to the column changes. Since the conventional control device calculates the thermal displacement amount of the column regardless of the position of the saddle, an accurate thermal displacement amount cannot be calculated.

The present disclosure has been made in view of such circumstances, and an objective thereof is to provide a calculation device, a machine tool, a calculation method, and a computer program capable of calculating a thermal displacement of a support part according to a position of a drive part.

### Solution to Problem

A calculation device according to an embodiment of the present disclosure includes a position measurement part, a heat transfer amount calculation part, a first temperature calculation part, and a first thermal displacement calculation part. The position measurement part measures a position of a drive part which is movable and supported by a support part. The heat transfer amount calculation part calculates a heat transfer amount from the drive part to the support part at the position of the drive part measured by the position measurement part. The first temperature calculation part calculates a temperature of the support part based on the heat transfer amount calculated by the heat transfer amount calculation part. The first thermal displacement calculation part calculates a thermal displacement of the support part based on the temperature calculated by the first temperature calculation part.

In the present disclosure, the position of the drive part is measured, the heat transfer amount from the drive part to the support part at the measured position of the drive part is calculated, and the temperature and the thermal displacement of the support part are calculated based on the calculated heat transfer amount.

The calculation device according to an embodiment of the present disclosure further includes a heat generation amount calculation part, a second temperature calculation part, and a second thermal displacement calculation part. The heat generation amount calculation part calculates a heat generation amount of the drive part. The second temperature calculation part calculates a temperature of the drive part based on the heat generation amount calculated by the heat generation amount calculation part and the heat transfer amount calculated by the heat transfer amount calculation part. The second thermal displacement calculation part calculates a thermal displacement of the drive part based on the temperature calculated by the second temperature calculation part. After the position measurement part measures the position of the drive part, the heat generation amount calculation part calculates the heat generation amount, the heat transfer amount calculation part calculates the heat transfer amount, the second temperature calculation part calculates the temperature of the drive part, and the second thermal displacement calculation part calculates the thermal displacement of the drive part.

In the present disclosure, the heat generation amount of the drive part is calculated, and the temperature of the drive part is calculated based on the heat generation amount and the heat transfer amount. The thermal displacement of the drive part is calculated based on the calculated temperature.

The calculation device according to an embodiment of the present disclosure further includes a summation part. The summation part sums a displacement of the drive part, which is based on the thermal displacement of the support part calculated by the first thermal displacement calculation part, and the thermal displacement of the drive part calculated by the second thermal displacement calculation part, after the position measurement part measures the position of the drive part.

In the present disclosure, the displacement of the drive part, which is based on the thermal displacement of the support part, and the thermal displacement of the drive part are summed.

In the calculation device according to an embodiment of the present disclosure, the support part has a track. The drive part has multiple sliders slidable on the track. The position measurement part measures a position of each of the sliders. After the position measurement part measures the position of each of the sliders, the heat transfer amount calculation part calculates a heat transfer amount from each of the sliders to the track, the first temperature calculation part calculates a temperature of the track, and the first thermal displacement calculation part calculates a thermal displacement of the track.

In the present disclosure, the heat transfer amount from the slider to the track is calculated, the temperature of the track is calculated based on the heat transfer amount, and the thermal displacement of the track is calculated based on the temperature.

In the calculation device according to an embodiment of the present disclosure, the first temperature calculation part calculates the temperature of the support part according to a finite element method that includes the heat transfer amount calculated by the heat transfer amount calculation part in a boundary condition. The first thermal displacement calculation part calculates the thermal displacement of the support part according to a finite element method that includes the temperature calculated by the first temperature calculation part in a boundary condition.

In the present disclosure, the temperature of the support part is calculated according to a finite element method including the heat transfer amount in a boundary condition, and the thermal displacement of the support part is calculated according to a finite element method including the temperature of the support part in a boundary condition.

In the calculation device according to an embodiment of the present disclosure, the second temperature calculation part calculates the temperature of the drive part according to a finite element method that includes the heat generation amount calculated by the heat generation amount calculation part and the heat transfer amount calculated by the heat transfer amount calculation part in a boundary condition. The second thermal displacement calculation part calculates the thermal displacement of the drive part according to a finite element method that includes the temperature calculated by the second temperature calculation part in a boundary condition.

In the present disclosure, the temperature of the drive part is calculated according to a finite element method including the heat generation amount and the heat transfer amount of the drive part in a boundary condition, and the thermal displacement of the drive part is calculated according to a finite element method including the temperature of the drive part in a boundary condition.

A machine tool according to an embodiment of the present disclosure includes a column, a spindle head movably supported by the column and supporting a spindle, and any one of the calculation devices described above, in which the support part is the column and the drive part is the spindle head.

In the present disclosure, thermal displacements of the column and the spindle head are calculated.

A machine tool according to an embodiment of the present disclosure includes a column, a spindle head movably supported by the column and supporting a spindle, and the above calculation device, in which the support part is the column and the drive part is the spindle head. The heat generation amount calculation part calculates a heat generation amount of the spindle head based on predetermined information indicating a relationship between a rotational speed of the spindle and the heat generation amount of the spindle head.

In the present disclosure, the heat generation amount of the spindle head is calculated based on the predetermined information indicating a relationship between the rotational speed of the spindle and the heat generation amount of the spindle head.

A calculation method according to an embodiment of the present disclosure includes: measuring a position of a drive part which is movable and supported by a support part; calculating a heat transfer amount from the drive part to the support part at the measured position of the drive part; calculating a temperature of the support part based on the calculated heat transfer amount; and calculating a thermal displacement of the support part based on the calculated temperature of the support part.

In the present disclosure, the position of the drive part is measured, the heat transfer amount from the drive part to the support part at the measured position of the drive part is calculated, and the temperature and the thermal displacement of the support part are calculated based on the calculated heat transfer amount.

A computer program according to an embodiment of the present disclosure is executable by a calculation device. The computer program causes the calculation device to execute a processing including: measuring a position of a drive part which is movable and supported by a support part; calculating a heat transfer amount from the drive part to the support part at the measured position of the drive part; calculating a temperature of the support part based on the calculated heat transfer amount; and calculating a thermal displacement of the support part based on the calculated temperature of the support part.

In the present disclosure, the position of the drive part is measured, the heat transfer amount from the drive part to the support part at the measured position of the drive part is calculated, and the temperature and the thermal displacement of the support part are calculated based on the calculated heat transfer amount.

### Effects of Invention

In the calculation device, the machine tool, the calculation method, and the computer program according to an embodiment of the present disclosure, the position of the drive part is measured, the heat transfer amount from the drive part to the support part at the measured position of the drive part is calculated, and the temperature and the thermal displacement of the support part are calculated based on the calculated heat transfer amount. Therefore, the position of the drive part can be reflected in the thermal displacement of the support part, and calculation accuracy of the thermal displacement can be improved.

### BRIEF DESCRIPTION OF THE DRAWINGS

[FIG. 1] is a schematic perspective view of a machine tool.
[FIG. 2] is a partially enlarged right side view schematically showing a column, a spindle head, tracks, sliders, etc.
[FIG. 3] is a block diagram schematically showing a configuration of a control device.
[FIG. 4] is a flowchart illustrating a temperature calculation processing of the spindle head by a control part.
[FIG. 5] is a flowchart illustrating a temperature calculation processing of the column by the control part.
[FIG. 6] is a flowchart illustrating a position correction processing for correcting a position of a tool.
[FIG. 7] is a right side view illustrating a thermal displacement of the spindle head.
[FIG. 8] is a right side view illustrating a thermal displacement of the column.
[FIG. 9] is a right side view illustrating the thermal displacement of the spindle head attached to the column.

### DESCRIPTION OF THE EMBODIMENTS

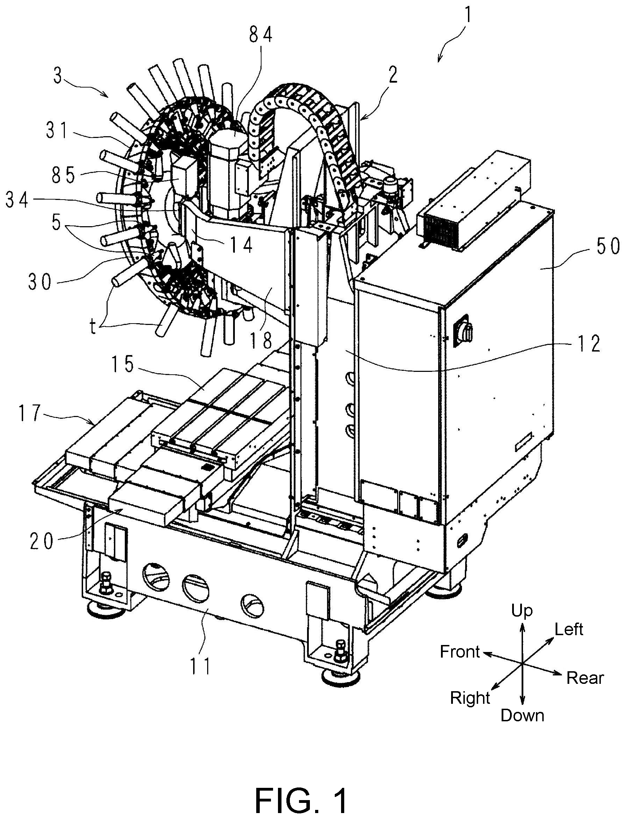

A machine tool of the present disclosure will be described below based on the drawings. In the following description, vertical, left-right, and front-rear directions indicated by arrows in the figures will be referred to. The vertical, left-right, and front-rear directions in the figures are indicated simply for ease of illustration, and the directions are not limited thereto. FIG. 1 is a schematic perspective view of the machine tool.

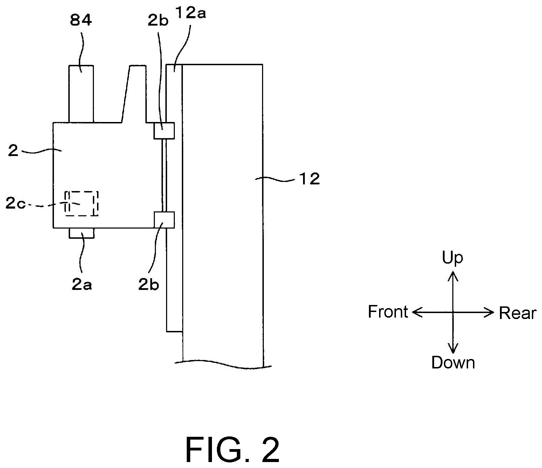

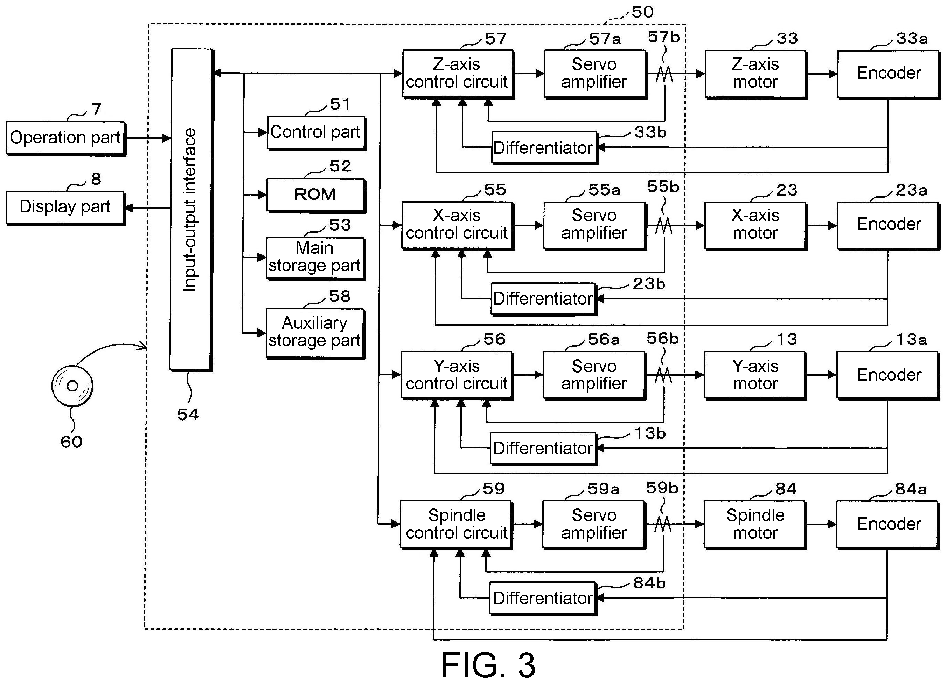

The machine tool 1 includes a base 11, a column 12, a spindle head 2, a tool magazine 3, a table 15, and a control device 50. The base 11 is fixed on a floor surface. The column 12 extends upward from a rear part of the base 11. The spindle head 2 is provided on a front surface of the column 12 and is capable of moving up and down in a Z-axis direction (vertical direction) by driving of a Z-axis motor 33 (see FIG. 3). As shown in FIG. 2, a spindle 2a extending vertically is provided in the spindle head 2 via a bearing 2c. A lower end part of the spindle 2a is fitted with a tool holder 5. The tool holder 5 holds a tool t. The tool t is fitted to the spindle 2a via the tool holder 5. The spindle 2a rotates on an axis by driving of a spindle motor 84.

Support plates 18 extend forward from upper left and right sides of the column 12. The spindle head 2 is disposed between the two support plates 18. A support stand 14 is provided at front end parts of the support plates 18. The support stand 14 rotatably supports a support shaft 34 inclined to descend toward a front side.

The tool magazine 3 includes a rotating disk 30 and multiple gripping parts (not shown) attached to an outer circumference of the rotating disk 30. Each gripping part holds a tool holder 5. The rotating disk 30 is fixed to the support shaft 34. The support shaft 34 rotates by driving of a magazine motor 85, and the tool magazine 3 rotates around an axis of the support shaft 34.

In the case where a tool holder 5 holding a tool t is disposed at an exchange position, and the spindle head 2 to which no tool holder 5 is fitted descends, the tool holder 5, that is, the tool t, is fitted to the spindle 2a. In the case where an empty gripping part to which no tool holder 5 is fitted is disposed at the exchange position, and the spindle head 2 fitted with a tool holder 5 holding a tool t ascends, the tool holder 5, that is, the tool t, is gripped by the empty gripping part.

A Y-axis moving mechanism 17 moving in the front-rear direction is provided on the front side of an upper part of the base 11. The Y-axis moving mechanism 17 includes a moving plate (not shown) moving in the front-rear direction. An X-axis moving mechanism 20 moving in the left-right direction is provided on an upper side of the moving plate. The moving plate and the X-axis moving mechanism 20 move in the front-rear direction by driving of the Y-axis moving mechanism 17. A table 15 holding a workpiece is provided on the X-axis moving mechanism 20.

The Y-axis moving mechanism 17 includes a Y-axis motor 13 (see FIG. 3), and the moving plate and the X-axis moving mechanism 20 move in the front-rear direction by driving of the Y-axis motor 13. The X-axis moving mechanism 20 includes an X-axis motor 23 (see FIG. 3), and the table 15 moves in the left-right direction by driving of the X-axis motor 23.

FIG. 2 is a partially enlarged right side view schematically showing the column 12, the spindle head 2, tracks 12a, and sliders 2b. As shown in FIG. 2, two tracks 12a extending vertically are provided on the front surface of the column 12. The two tracks 12a are arranged substantially parallel to each other in the left-right direction. Four sliders 2b are provided on a rear surface of the spindle head 2. The sliders 2b are disposed respectively at an upper right part, a lower right part, an upper left part, and a lower left part of the rear surface of the spindle head 2. The two sliders disposed at the upper right part and the lower right part are connected to the track 12a on the right side. The two sliders disposed at the upper left part and the lower left part are connected to the track 12a on the left side. Each slider 2b is slidable in the vertical direction along the track 12a. Each slider 2b moves in the vertical direction on the track 12a by driving of the Z-axis motor 33. That is, the spindle head 2 moves in the vertical direction.

FIG. 3 is a block diagram schematically showing a configuration of the control device 50. The control device 50 includes a control part 51, a ROM 52, a main storage part 53, an auxiliary storage part 58, and an input-output interface 54. The control device 50 constitutes a calculation device. The control part 51 includes a processor (e.g., a CPU, an MPU, or a GPU) or a logic circuit (e.g., an FPGA or an ASIC), and also includes a timer. The control device 50 may also include a timer separately from the control part 51. The main storage part 53 includes a RAM. In the case where an operator operates an operation part 7, a signal is inputted from the operation part 7 to the input-output interface 54. The operation part 7 is, for example, a keyboard, buttons, a touch panel, etc. The input-output interface 54 outputs a signal to a display part 8. The display part 8 displays characters, figures, symbols, etc. The display part 8 is, for example, a liquid crystal display or an organic EL display.

The auxiliary storage part 58 is an EEPROM, a flash memory, a hard disk, an SSD, etc. and is rewritable. The auxiliary storage part 58 stores a machining program, finite element equations used for calculation based on the finite element method, thermal displacement amounts, positions, functions A to C, etc. For example, a machining program recorded on a portable recording medium 60 such as an optical disk or a USB memory may be installed in the auxiliary storage part 58. The control part 51 loads the machining program from the auxiliary storage part 58 to the main storage part 53, and executes control of driving of each motor or a correction amount calculation processing to be described later. The machining program has multiple commands, and the control part 51 sequentially loads and executes each command. The ROM 52 may store the machining program, the finite element equations, the functions A to C, etc. The main storage part 53 may store the machining program, the finite element equations, the thermal displacement amounts, the positions, the functions A to C, etc.

The control device 50 includes an X-axis control circuit 55, a servo amplifier 55a, and a differentiator 23b corresponding to the X-axis motor 23. The X-axis motor 23 includes an encoder 23a. The X-axis control circuit 55 outputs a command indicating a current amount to the servo amplifier 55a based on a command from the control part 51. The servo amplifier 55a receives the command and outputs a drive current to the X-axis motor 23.

The encoder 23a outputs a position feedback signal to the X-axis control circuit 55. The X-axis control circuit 55 executes feedback control of position based on the position feedback signal.

The encoder 23a outputs a position feedback signal to the differentiator 23b, and the differentiator 23b converts the position feedback signal into a speed feedback signal and outputs the speed feedback signal to the X-axis control circuit 55. The X-axis control circuit 55 executes feedback control of speed based on the speed feedback signal.

A current detector 55b detects a value of the drive current outputted by the servo amplifier 55a. The current detector 55b feeds the value of the drive current back to the X-axis control circuit 55. The X-axis control circuit 55 executes current control based on the value of the drive current.

The control device 50 includes a Y-axis control circuit 56, a servo amplifier 56a, a differentiator 13b, and a current detector 56b corresponding to the Y-axis motor 13, and the Y-axis motor 13 includes an encoder 13a. The Y-axis control circuit 56, the servo amplifier 56a, the differentiator 13b, the Y-axis motor 13, the encoder 13a, and the current detector 56b are similar to those of the X-axis, and descriptions thereof will be omitted.

The control device 50 includes a Z-axis control circuit 57, a servo amplifier 57a, a current detector 57b, and a differentiator 33b corresponding to the Z-axis motor 33. The Z-axis motor 33 includes an encoder 33a. The Z-axis control circuit 57, the servo amplifier 57a, the differentiator 33b, the Z-axis motor 33, the encoder 33a, and the current detector 57b are similar to those of the X-axis, and descriptions thereof will be omitted.

The control device 50 includes a spindle control circuit 59, a servo amplifier 59a, a current detector 59b, and a differentiator 84b corresponding to the spindle motor 84. The spindle motor 84 includes an encoder 84a. The spindle control circuit 59, the servo amplifier 59a, the differentiator 84b, the spindle motor 84, the encoder 84a, and the current detector 59b are similar to those of the X-axis, and descriptions thereof will be omitted.

The control device 50 also executes feedback control on the magazine motor 85 similar to the feedback control on the X-axis motor 23.

The control part 51 models the column 12 and the spindle head 2 based on multiple elements to perform structural analysis according to the finite element method. The column 12 includes the tracks 12a, and the spindle head 2 includes the sliders 2b. The elements are, for example, tetrahedrons or hexahedrons. For example, end points of each element constitute nodes. The control part 51 calculates the temperature of each node in the spindle head 2 over time according to the finite element method, with the heat generation amount of the spindle motor 84, the heat generation amount of the bearing 2c, and the heat transfer amount from the column 12 to the spindle head 2 as boundary conditions. In addition, the control part 51 calculates the temperature of each node in the column 12 over time according to the finite element method, with the heat transfer amount from the spindle head 2 to the column 12 as a boundary condition. That is, the control part 51 executes temperature analysis on the spindle head 2 and the column 12 using the finite element method.

The control part 51 calculates, for example, a heat generation amount Q1 [W] of the spindle motor 84 based on a function A indicating a relationship between the rotational frequency of the spindle 2a, the current value of the spindle motor 84, and the heat generation amount Q1. The control part 51 calculates, for example, a heat generation amount Q2 [W] of the bearing 2c based on a function B indicating a relationship between the rotational frequency of the spindle 2a and the heat generation amount Q2. The control part 51 calculates, for example, a heat transfer amount Q3 from the column 12 to the spindle head 2 based on a function C indicating a relationship between the temperature of the slider 2b, the temperature of the track 12a, and the heat transfer amount Q3. The control device 50 may also store a table indicating a relationship between the rotational frequency of the spindle 2a and the heat generation amount Q1 in place of the function A, store a table indicating a relationship between the rotational frequency of the spindle 2a and the heat generation amount Q2 in place of the function B, store a table indicating a relationship between the temperature of the slider 2b, the temperature of the track 12a, and the heat transfer amount Q3 in place of the function C, and determine the heat generation amounts Q1 and Q2 and the heat transfer amount Q3 with reference to the respective tables. The functions A and B and the tables replacing the functions A and B constitute predetermined information indicating a relationship between the rotational speed of the spindle 2a and the heat generation amount of the spindle head 2.

In the case where the temperature of the column 12 is higher than that of the spindle head 2, the heat transfer amount Q3 from the column 12 to the spindle head 2 is positive, and in the case where the temperature of the column 12 is lower than that of the spindle head 2, the heat transfer amount Q3 is negative. That is, in the case where the heat transfer amount Q3 is negative, heat transfers from the spindle head 2 to the column 12.

The function A is represented by, for example, Q1 = k1·ω+k2·I². Herein, k1 and k2 indicate coefficients, ω indicates the rotational frequency of the spindle 2a, and I indicates the current value of the spindle motor 84. The function B is represented by, for example, Q2 = k3·ω. Herein, k3 indicates a coefficient, and ω indicates the rotational frequency of the spindle 2a. The function C is, for example, Q3 = (T_{b}(t)-T(t, z_{b}))·H. T_{b}(t) indicates the temperature of the slider 2b, T(t, z_{b}) indicates the temperature of the track 12a, and H indicates a predetermined coefficient. t indicates a time point, and z_{b} indicates the vertical position of the slider 2b.

Heat transfer occurs between the spindle head 2 and the column 12 via the sliders 2b and the tracks 12a. Temperature distribution at the boundary between the spindle head 2 and the column 12 occurs in the Z direction of the track 12a, that is, in the vertical direction. Therefore, by calculating the heat transfer amount according to the vertical position z_{b} of the slider 2b, the calculation accuracy of the temperatures of the spindle head 2 and the column 12 can be enhanced.

The control part 51 uses, for example, a finite element equation of Equation (1) below for the calculation of temperatures. In Equation (1), K indicates a thermal diffusion matrix of each node, C indicates a heat capacity matrix of each node, F indicates a heat flux vector of each node, T indicates a temperature vector of each node, and Δt indicates a time between a time point n and a time point n+1. The time point n indicates a current time point, and the time point n+1 indicates a time point when Δt has elapsed from the time point n. Δt is, for example, a control cycle of the control device 50.
[Math. 1] $\left[\left[K\right]+\frac{1}{Δt}\left[C\right]\right] {\left\{T\right\}}^{n + 1} = \left\{F\right\} + \frac{1}{Δt} \left[C\right] {\left\{T\right\}}^{n}$ (1)

After executing the temperature analysis described above, the control part 51 calculates a thermal displacement of each node in the spindle head 2 over time according to the finite element method, with the temperature of each node in the spindle head 2 calculated over time as a boundary condition. In addition, the control part 51 calculates a thermal displacement of each node in the column 12 over time according to the finite element method, with the temperature of each node in the column 12 calculated over time as a boundary condition. That is, after executing the temperature analysis described above, the control part 51 executes thermal displacement analysis on the spindle head 2 and the column 12 using the finite element method.

The control part 51 uses, for example, a finite element equation of Equation (2) below for the calculation of displacement. In Equation (2), δ indicates a displacement vector of each node, P indicates a multiplication matrix of an inverse matrix of a stiffness matrix by a nodal force coefficient matrix, and T indicates a temperature vector of each node.
[Math. 2] $\left\{δ\right\} = \left[P\right] \left\{T\right\}$ (2)

The control part 51 calculates the displacement of the spindle 2a based on the thermal displacement of each node in the spindle head 2 and the thermal displacement of each node in the column 12.

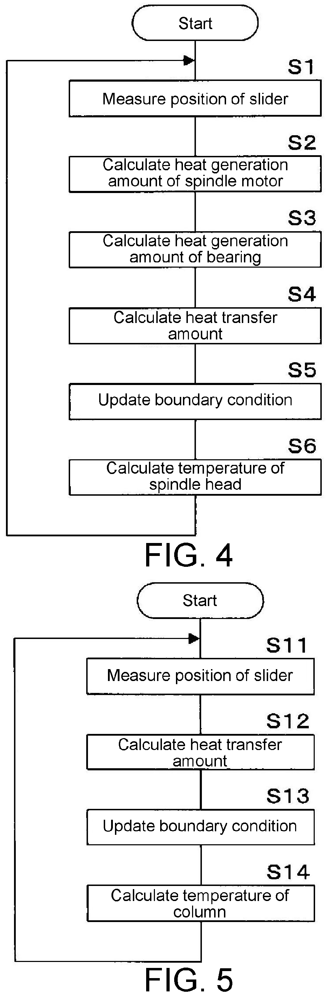

FIG. 4 is a flowchart illustrating a temperature calculation processing of the spindle head 2 by the control part 51. The control part 51 measures a vertical position z_{b} of each slider 2b (S1). Since the distance between the upper slider 2b and the lower slider 2b is stored in the ROM 52 in advance, in the case where the detection result of the encoder 33a indicates the position of the lower slider 2b, the position of the upper slider 2b is obtained by adding the distance stored in the ROM 52 to the detection result. The control part 51 calculates, that is, measures, the vertical position z_{b} of each slider 2b based on the detection result of the encoder 33a.

The control part 51 calculates a heat generation amount Q1 of the spindle motor 84 (S2). The control part 51 acquires a rotational frequency of the spindle 2a of the time point when the position of the slider 2b is measured, that is, at the current time point, from the machining program, for example, and calculates the heat generation amount Q1 by applying the rotational frequency of the spindle 2a to the function A. The control part 51 calculates a heat generation amount Q2 of the bearing 2c (S3). The control part 51 acquires the rotational frequency of the spindle 2a of the current time point from the machining program, for example, and calculates the heat generation amount Q2 by applying the rotational frequency of the spindle 2a to the function B.

The control part 51 calculates a heat transfer amount Q3 from the column 12 to the spindle head 2 (S4). The control part 51 substitutes, for example, a temperature T_{b}(t) of the slider 2b and a temperature T(t, z_{b}) of the track 12a at the current time point into the function C, and calculates the heat transfer amount Q3. In an initial state, the temperature T_{b}(t) and the temperature T(t, z_{b}) are set to a predetermined temperature, e.g., 0°C. In step S4, the control part 51 initially uses the predetermined temperature, but from the next calculation onward, the control part 51 uses the temperature T_{b}(t) calculated in step S6 and the temperature T(t, z_{b}) calculated in step S14 to be described later. Since heat is transferred at positions of the respective sliders 2b, that is, at four positions, the control part 51 calculates the heat transfer amount Q3 from the column 12 to the spindle head 2 at each of the positions.

The control part 51 updates the boundary conditions (S5). That is, the control part 51 updates the heat generation amounts Q1 and Q2 and the heat transfer amount Q3. The control part 51 calculates the temperature of each node of the spindle head 2 based on Equation (1), with the heat generation amounts Q1 and Q2 and the heat transfer amount Q3 as boundary conditions (S6). The control part 51 returns the processing to step S1. The control part 51 repeatedly executes the temperature calculation processing of the spindle head 2 for each control cycle Δt, and stores the calculated temperatures. In step S6, the control part 51 calculates the temperature T_{b}(t) of the slider 2b. In step S14 to be described later, the control part 51 calculates the temperature T(t, z_{b}) of the track 12a. The control part 51 is not necessarily required to execute the temperature calculation processing of the spindle head 2 for each control cycle Δt. For example, the temperature calculation processing of the spindle head 2 may be executed upon lapse of the control cycle Δt several times, such as 2Δt and 3Δt, or the temperature calculation processing of the spindle head 2 may be executed upon lapse of 2Δt and, thereafter, the temperature calculation processing of the spindle head 2 may be executed upon lapse of 3Δt. That is, the temperature calculation processing of the spindle head 2 may be executed upon lapse of each non-fixed cycle.

The control part 51 executing step S2 and step S3 constitutes a heat generation amount calculation part. The control part 51 executing step S6 constitutes a second temperature calculation part.

FIG. 5 is a flowchart illustrating a temperature calculation processing of the column 12 by the control part 51. The control part 51 measures a vertical position z_{b} of each slider 2b (S11). Since the distance between the upper slider 2b and the lower slider 2b is stored in the ROM 52 in advance, in the case where the detection result of the encoder 33a indicates the position of the lower slider 2b, the position of the upper slider 2b is obtained by adding the distance stored in the ROM 52 to the detection result. The control part 51 calculates, that is, measures, the vertical position z_{b} of each slider 2b based on the detection result of the encoder 33a. The control part 51 calculates a heat transfer amount Q3' from the spindle head 2 to the column 12 (S12). Since the heat transfer amount Q3' is a value obtained by reversing the sign (positive/negative) of the heat transfer amount Q3, the control part 51 can calculate the heat transfer amount Q3' from the column 12 to the spindle head 2 at the positions of the respective sliders 2b based on the function C. That is, the control part 51 calculating the heat transfer amount Q3 is also the control part 51 calculating the heat transfer amount Q3'.

The control part 51 updates the boundary condition (S13). That is, the control part 51 updates the heat transfer amount Q3'. The control part 51 calculates the temperature of each node of the column 12 based on Equation (1), with the heat transfer amount Q3' as a boundary condition (S14). In step S14, the control part 51 calculates a temperature T(t, z_{b}) of the track 12a. The control part 51 returns the processing to step S11. The control part 51 repeatedly executes the temperature calculation processing of the column 12 for each control cycle Δt and stores the calculated temperature. The control part 51 is not necessarily required to execute the temperature calculation processing of the column 12 for each control cycle Δt. For example, the temperature calculation processing of the column 12 may be executed upon lapse of the control cycle Δt several times, such as 2Δt and 3Δt, or the temperature calculation processing of the column 12 may be executed upon lapse of 2Δt and, thereafter, the temperature calculation processing of the column 12 may be executed upon lapse of 3Δt. That is, the temperature calculation processing of the column 12 may be executed upon lapse of each non-fixed cycle.

The control part 51 executing step S11, step S12, and step S13 constitutes a position measurement part, a heat transfer amount calculation part, and a first temperature calculation part.

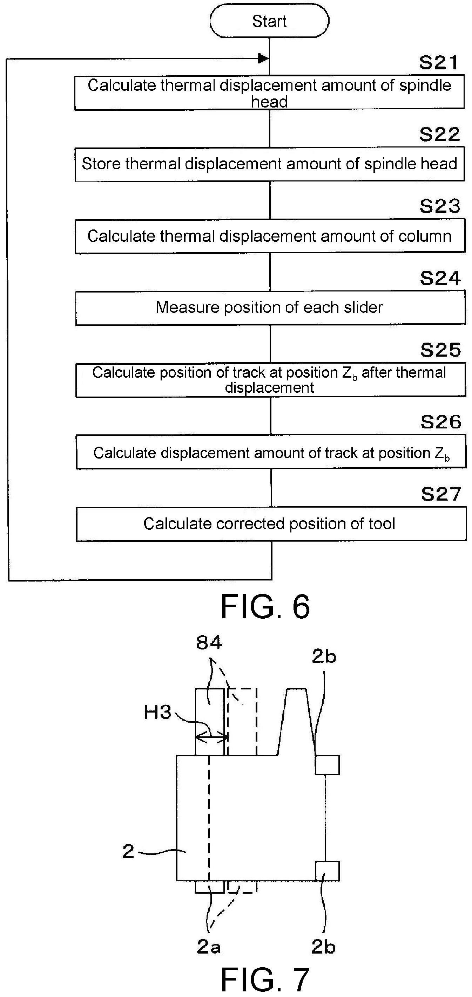

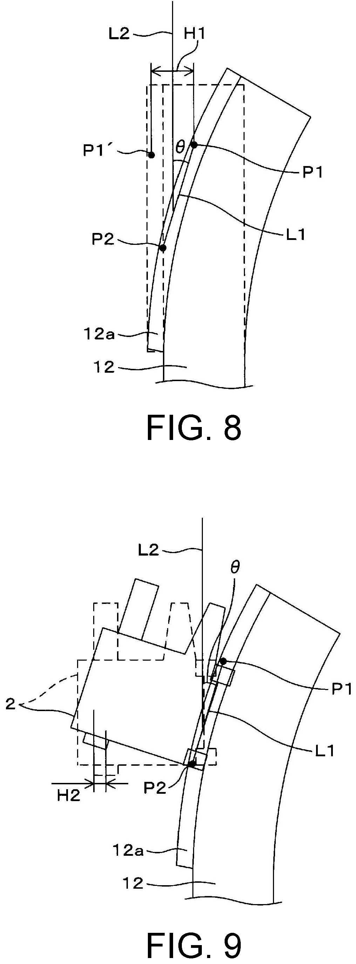

FIG. 6 is a flowchart illustrating a position correction processing for correcting a position of a tool. FIG. 7 is a right side view illustrating thermal displacement of the spindle head 2. FIG. 8 is a right side view illustrating thermal displacement of the column 12. FIG. 9 is a right side view illustrating thermal displacement of the spindle head attached to the column. In FIG. 7, broken lines indicate the spindle head 2, the spindle motor 84, and the spindle 2a before thermal displacement. In FIG. 8, broken lines indicate the column 12 before thermal displacement.

As shown in FIG. 6, the control part 51 calculates a thermal displacement amount of each node in the spindle head 2, with the temperature of each node in the spindle head 2 as a boundary condition (S21). The temperature of each node in the spindle head 2 is obtained in advance by the temperature calculation processing of the spindle head 2 described above (see FIG. 4). The control part 51 stores the thermal displacement amount of the spindle head 2 (S22), for example, to the auxiliary storage part 58. In steps S21 and S22, the control part 51 calculates and stores the thermal displacement amount of each node of the spindle head 2 in, for example, the horizontal direction. For example, as shown in FIG. 7, the spindle head 2 extends toward the front side due to thermal displacement.

The control part 51 calculates a thermal displacement amount of each node in the column 12, with the temperature of each node in the column 12 as a boundary condition (S23). The temperature of each node in the column 12 is obtained in advance by the temperature calculation processing of the column 12 described above (see FIG. 5). The control part 51 measures the position z_{b} of each slider 2b (S24).

The control part 51 calculates a position of the track 12a at the position z_{b} after thermal displacement, based on the thermal displacement amount of each node in the column 12 (S25). The position of the track 12a at the position z_{b} is the position of a portion of the track 12a connected with the slider 2b. The control part 51 calculates a displacement amount of the track 12a at the position z_{b} before and after thermal displacement (S26).

In step S26, for example, as shown in FIG. 8, the position of the slider 2b disposed on the upper side of one track 12a is taken as P1, the position of the slider 2b disposed on the lower side of the one track 12a is taken as P2, a line segment connecting P1 and P2 is taken as L1, and a vertical line is taken as L2. The control part 51 calculates an angle θ formed between the line segment L1 and the vertical line L2. The column 12 warps and deforms due to thermal displacement. Therefore, the spindle head 2 rotates by the angle θ. That is, the displacement amount calculated by the control part 51 in step S26 includes the displacement amount of the track 12a at the position z_{b} in the horizontal direction and the angle θ. The positions P1 and P2 are positions after thermal displacement. The control part 51 calculates a displacement amount H1 of the track 12a at the position z_{b} before and after thermal displacement in the horizontal direction, for example, as shown in FIG. 8. P1' in FIG. 8 is the position of the track 12a at the position z_{b} before thermal displacement. The position after thermal displacement of the position P1' is the position P1. Since the track 12a extends in the vertical direction due to thermal displacement, for example, the vertical position of the position P1' is slightly lower than the position P1.

The control part 51 calculates a corrected position of the tool t after thermal displacement, based on the displacement amount calculated in step S26 (S27). For example, the control part 51 calculates a first position of the tool t in the horizontal direction. Specifically, as shown in FIG. 9, the control part 51 calculates a displacement amount H2 in the horizontal direction generated due to the rotation by the angle θ with respect to the track 12a at the position z_{b}. For example, as shown in FIG. 7, the control part 51 calculates a displacement amount H3 of the spindle 2a in the horizontal direction, based on the thermal displacement amount of each node of the spindle head 2 stored in step S22. The control part 51 adds the displacement amount H1, the displacement amount H2, and the displacement amount H3 to the position of the tool t before thermal displacement, and calculates the corrected position of the tool t. The control part 51 may also calculate the corrected position of the tool t in the vertical direction.

The control part 51 executing step S21, step S23, and step S27 constitutes a second thermal displacement calculation part, a first thermal displacement calculation part, and a summation part.

The control part 51 returns the processing to step S21. The control part 51 repeatedly executes the position correction processing for each predetermined control cycle, and stores the corrected position of the tool t. The control part 51 can improve machining accuracy by reflecting the corrected position to the position of the tool t indicated by the machining program. The control part 51 is not necessarily required to repeatedly execute the position correction processing for each control cycle. For example, the position correction processing may be executed upon lapse of the control cycle Δt several times, such as 2Δt and 3Δt, or the position correction processing may be executed upon lapse of 2Δt and, thereafter, the position correction processing may be executed upon lapse of 3Δt. That is, the position correction processing may be executed upon lapse of each non-fixed cycle. The non-fixed cycle may be instructed by an operator based on an M code or the like, or may be inputted as a signal from outside.

In the machine tool of the embodiment, the position of the spindle head 2, that is, the slider 2b, is measured, the heat transfer amount from the spindle head 2 to the column 12 at the measured position of the slider 2b is calculated, and the temperature and thermal displacement of the column 12 are calculated based on the calculated heat transfer amount. Therefore, the position of the spindle head 2 can be reflected in the thermal displacement of the column 12, and the calculation accuracy of the thermal displacement can be improved.

In addition, the heat generation amount of the spindle head 2 is calculated, and the temperature of the spindle head 2 is calculated based on the heat generation amount and the heat transfer amount. The thermal displacement of the spindle head 2 is calculated based on the calculated temperature.

In addition, the displacement of the spindle head 2, which is based on the thermal displacement of the column 12, and the thermal displacement of the spindle head 2 are summed.

In addition, the heat transfer amount from the slider 2b to the track 12a is calculated, the temperature T(t, z_{b}) of the track 12a is calculated based on the heat transfer amount, and the thermal displacement of the track 12a is calculated based on the temperature T(t, z_{b}).

In addition, the temperature of the column 12 is calculated according to the finite element method including the heat transfer amount in the boundary condition, and the thermal displacement of the column 12 is calculated according to the finite element method including the temperature of the column 12 in the boundary condition.

In addition, the temperature of the spindle head 2 is calculated according to the finite element method including the heat generation amount of the spindle head 2 and the heat transfer amount Q3 in the boundary condition, and the thermal displacement of the spindle head 2 is calculated according to the finite element method including the temperature of the spindle head 2 in the boundary condition.

In addition, the heat generation amount of the spindle head 2 is calculated based on predetermined information, e.g., the functions A and B indicating the relationship between the rotational speed of the spindle 2a and the heat generation amount of the spindle head 2.

In the above embodiment, the spindle head 2 corresponds to a drive part, and the column 12 corresponds to a support part, but the disclosure is not limited thereto. For example, the Y-axis moving mechanism 17 may also correspond to the drive part and the base 11 may also correspond to the support part, or the X-axis moving mechanism 20 may also correspond to the drive part and the Y-axis moving mechanism 17 may also correspond to the support part.

The computer program may be implemented to be executed on a single computer, or may be implemented to be executed on multiple computers that are disposed at one site or distributed across multiple sites and are interconnected by a communication network.

The control device 50 may include multiple control parts 51, and each processing may be executed in a distributed manner by the multiple control parts 51.

The embodiment disclosed herein is to be considered in all respects as illustrative and not restrictive. The scope of the present invention is intended to include all modifications within the scope of the claims and scopes equivalent to the claims. The matters described in each embodiment may be combined with each other. In addition, the independent claims and dependent claims described in the claims may be combined with each other in all combinations regardless of the dependency form. Furthermore, although a form (multiple-dependency form) has been taken in the claims to present claims that refer to two or more other claims, the disclosure is not limited thereto. Another form may also be taken to present multiple-dependent claims (multi-multi claims) that refer to at least another multiple-dependent claim.

### Reference Signs List

- 2: spindle head (drive part)
- 2a: spindle
- 2b: slider
- 12: column (support part)
- 12a: track
- 50: control device
- 51: control part
- 53: main storage part
- 58: auxiliary storage part

## Claims

1. A calculation device comprising:
a position measurement part measuring a position of a drive part which is movable and supported by a support part;
a heat transfer amount calculation part calculating a heat transfer amount from the drive part to the support part at the position of the drive part measured by the position measurement part;
a first temperature calculation part calculating a temperature of the support part based on the heat transfer amount calculated by the heat transfer amount calculation part; and
a first thermal displacement calculation part calculating a thermal displacement of the support part based on the temperature calculated by the first temperature calculation part.

2. The calculation device as claimed in claim 1, further comprising:
a heat generation amount calculation part calculating a heat generation amount of the drive part;
a second temperature calculation part calculating a temperature of the drive part based on the heat generation amount calculated by the heat generation amount calculation part and the heat transfer amount calculated by the heat transfer amount calculation part; and
a second thermal displacement calculation part calculating a thermal displacement of the drive part based on the temperature calculated by the second temperature calculation part, wherein
after the position measurement part measures the position of the drive part, the heat generation amount calculation part calculates the heat generation amount, the heat transfer amount calculation part calculates the heat transfer amount, the second temperature calculation part calculates the temperature of the drive part, and the second thermal displacement calculation part calculates the thermal displacement of the drive part.

3. The calculation device as claimed in claim 2, further comprising a summation part that sums a displacement of the drive part, which is based on the thermal displacement of the support part calculated by the first thermal displacement calculation part, and the thermal displacement of the drive part calculated by the second thermal displacement calculation part, after the position measurement part measures the position of the drive part.

4. The calculation device as claimed in any one of claims 1 to 3, wherein
the support part has a track,
the drive part has a plurality of sliders slidable on the track,
the position measurement part measures a position of each of the sliders, and
after the position measurement part measures the position of each of the sliders, the heat transfer amount calculation part calculates a heat transfer amount from each of the sliders to the track, the first temperature calculation part calculates a temperature of the track, and the first thermal displacement calculation part calculates a thermal displacement of the track.

5. The calculation device as claimed in any one of claims 1 to 3, wherein
the first temperature calculation part calculates the temperature of the support part according to a finite element method that includes the heat transfer amount calculated by the heat transfer amount calculation part in a boundary condition, and
the first thermal displacement calculation part calculates the thermal displacement of the support part according to a finite element method that includes the temperature calculated by the first temperature calculation part in a boundary condition.

6. The calculation device as claimed in claim 2 or 3, wherein
the second temperature calculation part calculates the temperature of the drive part according to a finite element method that includes the heat generation amount calculated by the heat generation amount calculation part and the heat transfer amount calculated by the heat transfer amount calculation part in a boundary condition, and
the second thermal displacement calculation part calculates the thermal displacement of the drive part according to a finite element method that includes the temperature calculated by the second temperature calculation part in a boundary condition.

7. A machine tool comprising:
a column;
a spindle head movably supported by the column and supporting a spindle; and
the calculation device as claimed in any one of claims 1 to 3, wherein the support part is the column and the drive part is the spindle head.

8. A machine tool comprising:
a column;
a spindle head movably supported by the column and supporting a spindle; and
the calculation device as claimed in claim 2, wherein the support part is the column and the drive part is the spindle head, and
the heat generation amount calculation part calculates a heat generation amount of the spindle head based on predetermined information indicating a relationship between a rotational speed of the spindle and the heat generation amount of the spindle head.

9. A calculation method comprising:
measuring a position of a drive part which is movable and supported by a support part;
calculating a heat transfer amount from the drive part to the support part at the measured position of the drive part;
calculating a temperature of the support part based on the calculated heat transfer amount; and
calculating a thermal displacement of the support part based on the calculated temperature of the support part.

10. A computer program executable by a calculation device, the computer program causing the calculation device to execute a processing comprising:
measuring a position of a drive part which is movable and supported by a support part;
calculating a heat transfer amount from the drive part to the support part at the measured position of the drive part;
calculating a temperature of the support part based on the calculated heat transfer amount; and
calculating a thermal displacement of the support part based on the calculated temperature of the support part.
